# EUROPEAN PATENT SPECIFICATION

(11) **EP 3 222 385 B1**
(45) Date of publication and mention of the grant of the patent: **19.09.2018**
(21) Application number: 16382130.9
(22) Date of filing: 22.03.2016
(51) Int. Cl.: B23Q 1/01, B23B 3/10, B23Q 1/60, B23Q 11/00

(54) **VERTICAL LATHE COMPRISING COMPENSATION MEANS FOR THE MISALIGNMENT OF LONGITUDINAL GUIDES IN Y DIRECTION AND METHOD FOR THE COMPENSATION OF THE MISALIGNMENT**
VERTIKALE DREHBANK MIT MITTELN ZUR KOMPENSATION DER FEHLAUSRICHTUNG VON LÄNGLICHEN FÜHRUNGEN IN Y-RICHTUNG UND VERFAHREN ZUR KOMPENSATION DER FEHLAUSRICHTUNG
TOUR VERTICALE COMPRENANT DES MOYENS DE COMPENSATION DE DÉSALIGNEMENT DE GUIDES LONGITUDINAUX DANS UNE DIRECTION Y ET PROCÉDÉ POUR LA COMPENSATION DU DÉSALIGNEMENT

(43) Date of publication of application: 27.09.2017
(73) Proprietor: Bost Machine Tools Company S.L.U., 20159 Asteasu Gipuzkoa (ES)
(72) Inventor: GARCÍA, Emilio, 20159 Asteasu Gipuzkoa (ES); AROCENA, Fernando, 20159 Asteasu Gipuzkoa (ES)
(74) Representative: Balder IP Law, S.L.

(56) References cited:
- EP-A1- 2 412 475
- DE-A1- 3 600 231
- DE-A1-102008 032 057
- US-A- 4 250 776

## Description

### TECHNICAL FIELD

The present invention relates to vertical lathes comprising one or two vertical columns and a large transversal crossbeam for the displacement of a ram holding a tool in an X direction, and especially to lathes comprising means to compensate positioning errors in Y direction generated by the displacement of the crossbeam in X direction.

### BACKGROUND OF THE INVENTION

Vertical lathes comprise two vertical columns and a transversal crossbeam vertically displaceable in a vertical direction Z, upon guiding means on the vertical columns. One transversal carriage is displaceable along longitudinal guides of the transversal crossbeam in a horizontal direction X. A spindle head or ram for holding a tool is mounted in the transversal carriage and displaceable in the Z direction. The lathe also comprises a turning table for holding a workpiece.

An accurate positioning of the tool in relation to the workpiece is very important and especially the positioning of the tool along the X direction without deviation in the Y direction when the carriage moves along the longitudinal guides in X direction. A method to correct this kind of misalignments comprises the verification of the coaxiality between the axis of the ram and the axis of the turning table and a correction is done if necessary. The problem is that this correction is done only in the central position of the horizontal movement of the transversal carriage and the accuracy of the position of the carriage in the rest of the travel in X direction depends on the alignment of the longitudinal guides in the ZX plane, resulting in uncontrolled positioning errors of the tool along the travel in X direction. This problem is of especial importance in trepanning operations using simultaneously two rams working at opposite positions from the centre of the turning table.

US-4,250,776 discloses a vertical lathe according to the preamble of claim 1, and EP-2412475 A1 discloses a compensation method suitable for a vertical lathe.

### DESCRIPTION OF THE INVENTION

A first object of the invention is a vertical lathe comprising:
- at least one vertical column,
- a transversal crossbeam vertically displaceable in a vertical direction Z, upon guiding means on the at least one vertical column,
- at least one transversal carriage displaceable along the transversal crossbeam in an horizontal direction X,
- a ram for holding a tool, the ram being mounted in the transversal carriage and displaceable in the Z direction,
- a turning table for holding a workpiece.

According to the present invention the ram is guided vertically in a ram support which is mounted upon the transversal carriage by means of guiding means such that a movement of the ram support along the guiding means (W direction) produces simultaneously a movement of the ram support in the Z direction and in the Y direction (the ram is moved a similar distance in X and Z directions by the movement of the ram support). Thus is possible to correct any deviation of the longitudinal guides in Y direction.

In a preferred embodiment, the guiding means are placed in a plane forming an angle between 0.5 and 1.5 degrees with the ZX plane.

In a most preferred embodiment the guiding means are placed in a plane forming an angle between 0.8 and 1.2 degrees with the ZX plane.

The lathe further comprises compensating means for the movement of the ram in the Z direction a length equivalent to the displacement of the ram support in Z direction, the movement of the ram being in opposite direction to the displacement of the ram support. Thus the vertical position in Z direction is maintained and the height of the tool remains unchanged. The orthogonality of the planes ZX and ZY is also maintained.

Another object of the invention is a method for the compensation of the deviations of a ram in Y direction of a vertical lathe comprising a ram (5) guided vertically in a ram support (51) which is mounted upon a transversal carriage (4) by means of guiding means, comprising the following steps:
- moving the ram support in relation to the transversal carriage in a W direction which moves the ram support simultaneously in the Z direction and in the Y direction,
- moving the ram along the Z direction a length equivalent to the displacement of the ram support in Z direction, the movement of the ram being in opposite direction to the displacement of the ram support.

In a preferred embodiment the W direction is contained in a plane forming and angle between 0.5 and 1.5 degrees in relation to the ZX plane.

Ina most preferred embodiment the W direction is contained in a plane forming and angle between 0.8 and 1.2 degrees in relation to the ZX plane.

### BRIEF DESCRIPTION OF THE DRAWINGS

In order to supplement the description and with the purpose of facilitating a better comprehension of the characteristics of the invention according to a preferred example of a practical embodiment thereof, a set of figures is attached as an integral part of the description representing the following in an illustrative rather than limiting manner:
Figure 1 is a perspective of a vertical lathe according to a possible embodiment of the invention.
Figure 2 is a simplified drawing of the device of the invention illustrating three different positions for the ram in relation to the transversal carriage and turning table.
Figure 3 is a perspective of the device of the invention.
Figure 4 is a front view of the device of the invention.
Figure 5 is a zoom view of a part of the device of the invention.

### PREFERRED EMBODIMENT OF THE INVENTION

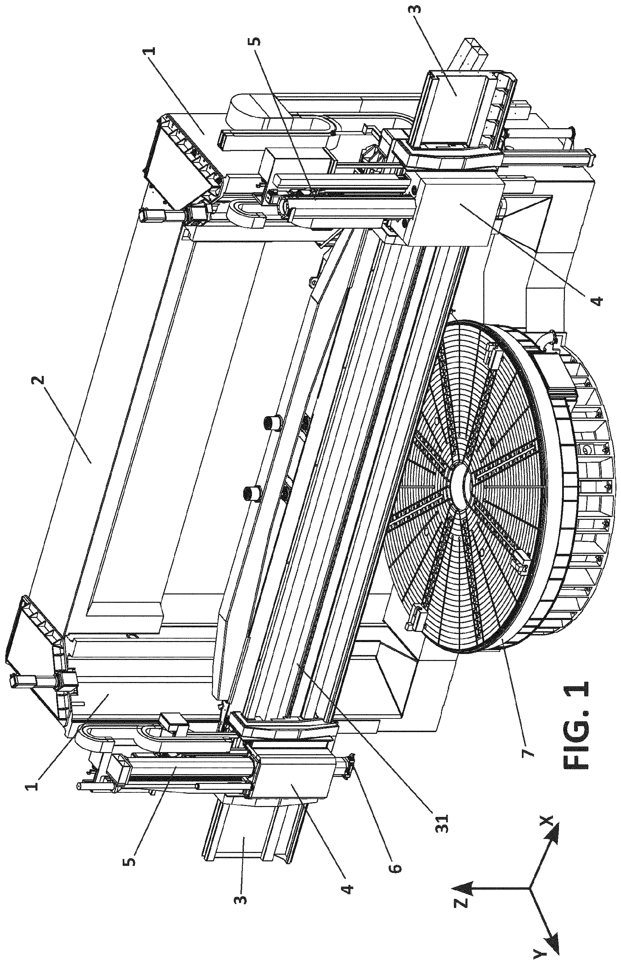

Figure 1 illustrates a vertical lathe comprising two vertical columns (1) and an upper transversal beam (2). A transversal crossbeam (3) is displaceable in a vertical direction Z, upon guiding means on the vertical columns (1).

Two transversal carriages (4) are displaceable along longitudinal guides (31) of the transversal crossbeam (3), in a horizontal direction X.

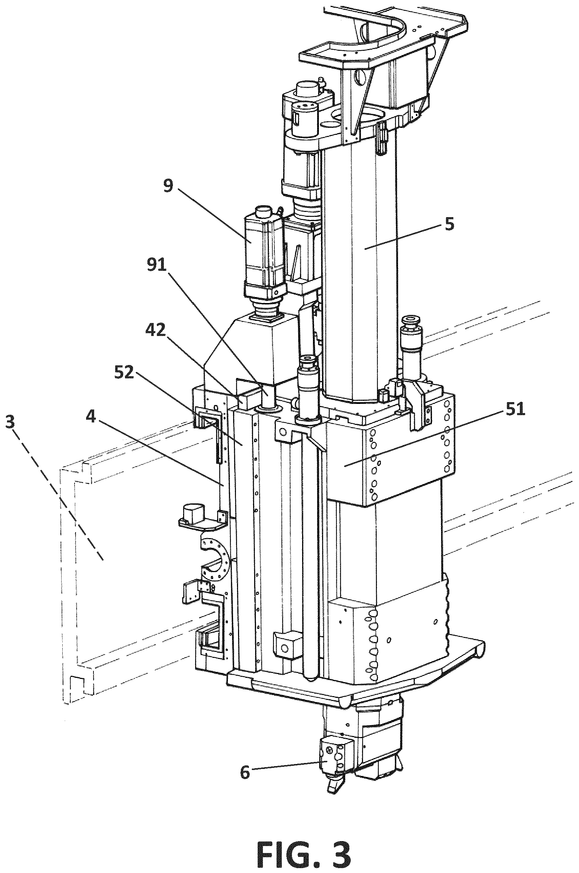

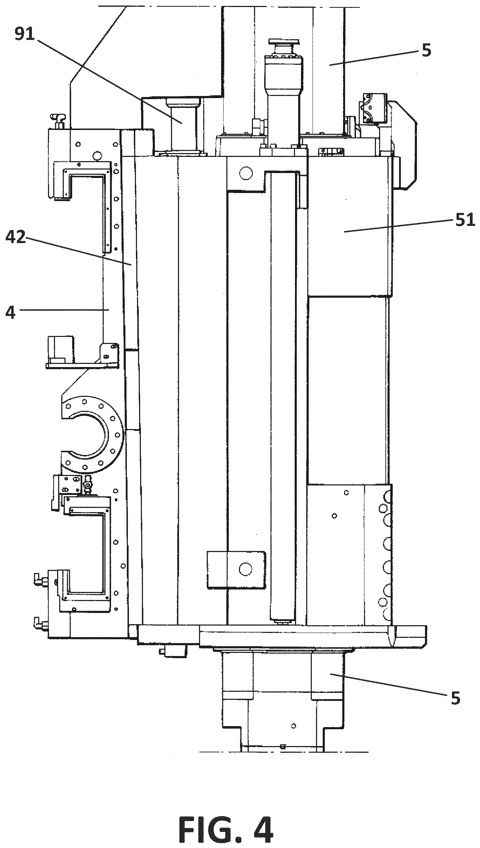

A ram (5) for holding a tool (6) is mounted in each of the transversal carriages (4) such that the ram (5) is displaceable in the Z direction to move the tool (6) up and down. The ram is guided in a ram support (51) which is mounted on the transversal carriage (4), as can be seen in figures 3 to 5.

The lathe comprises also a turning table (7) for holding a workpiece (not represented).

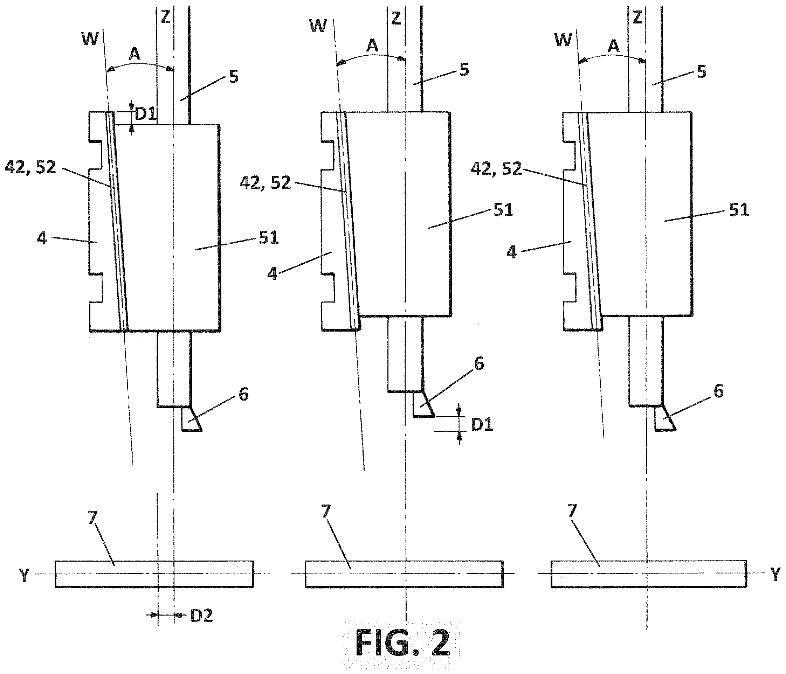

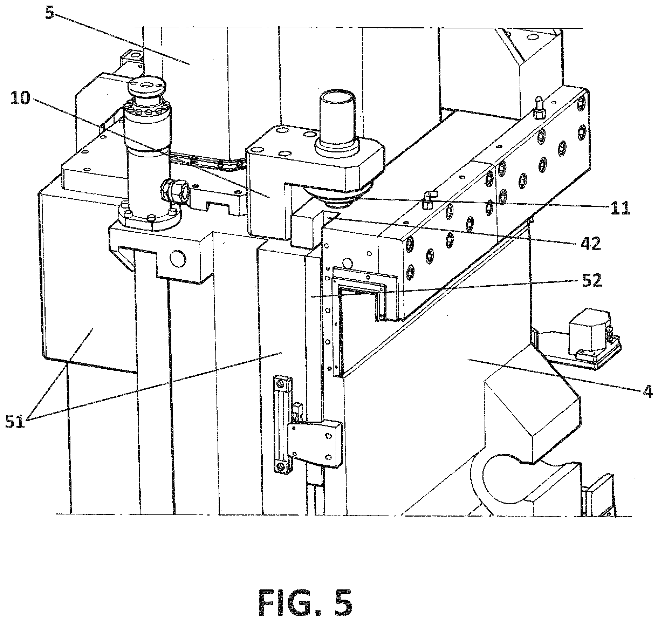

According to the present invention the lathe comprises two longitudinal guides (42, 52) between the transversal carriage (4) and the ram support (51) such that the ram support (51) is displaceable, along the longitudinal guides (42, 52), in relation to transversal carriage (4). As can be seen in figure 5 the longitudinal guides comprise a first guiding part (42) in the carriage (4) and a second guiding part (52) in the ram support (51). The longitudinal guides (42, 52) are not parallel to the vertical displacement of the ram (along Z axis), but parallel to a W direction forming an angle (A) with the Z direction, such that the displacement of the ram support (51) in relation to the transversal carriage (4) along the guides (42, 52), moves the ram support a vertical distance (D1) in the Z direction and simultaneously an horizontal distance (D2) in the Y direction, and consequently moves the ram (5) in Z and Y directions the same distances (D1) and (D2). This movement is illustrated in figure 2.

The W direction is contained in a plane forming an angle (A) between 0.5 and 1.5 degrees with the ZX plane and preferably forming an angle between 0.8 and 1.2 degrees with the ZX plane.

The vertical displacement (in Z axis) of the ram support (51) in relation to the carriage (4) can be between +/-10 mm and +/- 40mm.

For example, if the longitudinal guides (42, 52) are placed in a plane forming an angle of 1 degree in relation to the ZX plane a vertical displacement of the ram support of +/-25 mm provokes a simultaneous displacement in the horizontal direction Y of +/-0.436mm. Thus we can achieve a horizontal displacement of the ram in Y direction of +/-0.436mm in relation to the transversal carriage (4). This movement produces also a vertical displacement in Z direction of the ram support of 24.996 mm which is compensated by the movement of the ram (in an opposite Z direction), a distance D1, to maintain the height of the tool. This is also illustrated in figure 2.

Figure 2 illustrates three different positions between the ram support and ram in relation to the carriage and turning table. The drawing most to the left illustrates a first position showing the deviation between the position of the ram and the centre of a turning table. The drawing in the middle shows a position in which the ram support has moved along the longitudinal guides (W axis) and the ram has move a distance D1 in Z direction (upwards in figure 2) and a distance D2 in Y direction (leftwards in figure 2). The drawing most to the right in figure 2 illustrates the final position when the ram has moved a compensation distance D1 in the opposite direction along axis z (downwards in figure 2).

The longitudinal guides (42, 52) are preferably two prismatic guides as represented in figure 5. Between the prismatic guides there is a surface which is parallel to the plane ZX which can be used as a mounting and machining reference surface.
In a preferred embodiment the device of the invention comprises a motor (9) and a spindle nut system, the motor (9) and a threaded spindle being fixed to the carriage (4) and a nut being fixed to the ram support (51) such that the rotation of the motor (9) produces a rotation of a threaded spindle (91) and a linear displacement of the nut and consequently of the ram support (51) which slides along the guiding means (42, 52).

The device of the invention can comprise a counterweight mounted between the ram support (51) and the carriage (4). The counterweight comprises a base (10) mounted on the ram support (51) and a pressure cylinder (11) in contact with the carriage (4).

The device of the invention can also be used to verify the coaxiality of the axis of the tool and the axis of the turning table just by searching the zero position of the ram support (51) along the guiding means (42, 52).

## Claims

1. Vertical lathe comprising compensation means for the misalignment of longitudinal guides in a ZX plane comprising:
- at least one vertical column (1),
- a transversal crossbeam (3) vertically displaceable in a vertical direction Z, upon guiding means on the a least one vertical column (1),
- at least one transversal carriage (4) displaceable along the transversal crossbeam (3) in an horizontal direction X,
- a ram (5) for holding a tool (6), the ram (5) being mounted in the transversal carriage (4) and displaceable in the Z direction,
- a turning table (7) for holding a workpiece,
**characterized in that** the ram (5) is guided vertically in a ram support (51) which is mounted upon the transversal carriage (4) by means of guiding means (42, 52) such that a displacement of the ram support (51) along the guiding means (42, 52) produces simultaneously a movement of the ram support (51) in the Z direction and in the Y direction.

2. Vertical lathe as in claim 1 wherein the guiding means are placed in a plane forming an angle between 0.5 and 1.5 degrees with the ZX plane.

3. Vertical lathe as in claims 1 or 2 wherein the guiding means are placed in a plane forming an angle between 0.8 and 1.2 degrees with the ZX plane.

4. Vertical lathe as in previous claims comprising compensating means for the movement of the ram in the Z direction a length equivalent to the displacement of the ram support in Z direction, the movement of the ram being in opposite direction to the displacement of the ram support.

5. Vertical lathe as in previous claims comprising a motor (9) and a spindle nut system, the motor (9) and a threaded spindle being fixed to the carriage (4) and a nut being fixed to the ram support (51) such that the rotation of the motor (9) produces a rotation of a threaded spindle (91) and a linear displacement of the nut and consequently of the ram support (51) which slides along the guiding means (42, 52).

6. Vertical lathe as in previous claims comprising a counterweight mounted between the ram support (51) and the carriage (4), the counterweight comprising a base (10) mounted on ram support (51) and a pressure cylinder (11) in contact with the carriage (4).

7. Method for the compensation of the deviations of a ram in Y direction of a vertical lathe comprising a ram (5) guided vertically in a ram support (51) which is mounted upon a transversal carriage (4) by means of guiding means **characterized by** comprising the following steps:
- moving the ram support in relation to the transversal carriage in a W direction which moves the ram support simultaneously in the Z direction and in the Y direction,
- moving the ram along the Z direction a length equivalent to the displacement of the ram support in Z direction, the movement of the ram being in opposite direction to the displacement of the ram support.

8. Method as in claim 6 wherein the W direction is contained in a plane forming and angle between 0.5 and 1.5 degrees in relation to the ZX plane.

9. Method as in claim 6 wherein the W direction is contained in a plane forming and angle between 0.8 and 1.2 degrees in relation to the ZX plane.

## Patentansprüche

1. Vertikale Drehbank umfassend Mittel zur Kompensation der Fehlausrichtung von Longitudinalführungen in einer ZX Ebene aufweisend:
- wenigstens eine Vertikalsäule (1),
- einen transversalen Querriegel (3), der in einer vertikalen Richtung Z vertikal verschiebbar ist, auf Führungsmitteln auf der wenigstens einen Vertikalsäule (1),
- wenigstens einen transversalen Schlitten (4), der längs des transversalen Querriegels (3) in einer horizontalen Richtung X verschiebbar ist,
- einen Zylinder (5) zum Halten eines Werkzeugs (6), wobei der Zylinder (5) im transversalen Schlitten (4) befestigt und in Z Richtung verschiebbar ist,
- einen Drehtisch (7) zum Halten eines Werkstücks,
**dadurch gekennzeichnet, dass** der Zylinder (5) vertikal in einem Zylinderhalter (51) geführt wird, welcher auf dem transversalen Schlitten (4) mittels Führungsmitteln (42, 52) befestigt ist, so dass ein Versatz des Zylinderhalters (51) längs der Führungsmittel (42,52) zugleich eine Bewegung des Zylinderhalters (51) in Z Richtung und in Y Richtung erzeugt.

2. Vertikale Drehbank nach Anspruch 1, wobei die Führungsmittel in einer Ebene angeordnet sind, die einen Winkel zwischen 0,5 und 1,5 Grad mit der ZX Ebene bildet.

3. Vertikale Drehbank nach Anspruch 1 oder 2, wobei die Führungsmittel in einer Ebene angeordnet sind, die einen Winkel zwischen 0,8 und 1,2 Grad mit der ZX Ebene bildet.

4. Vertikale Drehbank nach einem der vorhergehenden Ansprüche aufweisend Mittel zur Kompensation der Bewegung des Zylinders in Z Richtung äquivalent der Länge des Versatzes des Zylinderhalters in Z Richtung, wobei die Bewegung des Zylinders in entgegen gesetzter Richtung zum Versatz des Zylinderhalters erfolgt.

5. Vertikale Drehbank nach einem der vorhergehenden Ansprüche aufweisend einen Motor (9) und ein Spindel-Mutter-System, wobei der Motor (9) und eine Gewindespindel am Schlitten (4) befestigt sind und eine Mutter am Zylinderhalter (51) befestigt ist, so dass die Rotation des Motors (9) eine Rotation der Gewindespindel (91) erzeugt und einen linearen Versatz der Mutter und schließlich des Zylinderhalters (51), welcher längs der Führungsmittel (42,52) gleitet.

6. Vertikale Drehbank nach einem der vorhergehenden Ansprüche aufweisend ein zwischen Zylinderhalter (51) und Schlitten (4) befestigtes Gegengewicht, wobei das Gegengewicht eine am Zylinderhalter (51) befestigte Basis (10) aufweist und einen Druckzylinder (11) in Kontakt mit dem Schlitten (4).

7. Verfahren zur Kompensation der Abweichungen eines Zylinders in Y Richtung einer vertikalen Drehbank aufweisend einen Zylinder (59), der vertikal in einer Zylinderhalterung (51) geführt ist, welche mittels Führungsmitteln auf einem transversalen Schlitten (4) befestigt ist, **dadurch gekennzeichnet, dass** es die folgenden Schritte umfasst:
- Bewegen der Zylinderhalterung in Relation zum Transversalschlitten in einer W Richtung, welches die Zylinderhalterung zugleich in Z Richtung und Y Richtung bewegt,
- Bewegen des Zylinders längs der Z Richtung in einer Länge die zum Versatz der Zylinderhalterung in Z Richtung äquivalent ist, wobei die Bewegung des Zylinders in der entgegen gesetzten Richtung zum Versatz des Zylinderhalters erfolgt.

8. Verfahren nach Anspruch 6, wobei die W Richtung in einer Ebene enthalten ist, die einen Winkel zwischen 0,5 und 1,5 Grad in Bezug auf die ZX Ebene bildet.

9. Verfahren nach Anspruch 6, wobei die W Richtung in einer Ebene enthalten ist, die einen Winkel zwischen 0,8 und 1,2 Grad in Bezug auf die ZX Ebene bildet.

## Revendications

1. Tour verticale comprenant des moyens de compensation pour le désalignement de guides longitudinaux dans un plan ZX, comprenant :
- au moins une colonne verticale (1),
- une traverse transversale (3) pouvant se déplacer verticalement dans une direction verticale Z, sur des moyens de guidage sur la ou les colonnes verticales (1),
- au moins un support transversal (4) pouvant se déplacer le long de la traverse transversale (3) dans une direction horizontale X,
- un vérin (5) pour porter un outil (6), le vérin (5) étant monté dans le support transversal (4) et pouvant se déplacer dans la direction Z,
- une table tournante (7) pour porter une pièce à travailler,
**caractérisée en ce que** le vérin (5) est guidé verticalement sur un support de vérin (51) qui est monté sur le support transversal (4) au moyen de moyens de guidage (42, 52) de telle sorte qu'un mouvement du support de vérin (51) le long des moyens de guidage (42, 52) produit simultanément un mouvement du support de vérin (51) dans la direction Z et dans la direction Y.

2. Tour verticale selon la revendication 1, les moyens de guidage étant placés dans un plan formant un angle entre 0,5 et 1,5 degrés avec le plan ZX.

3. Tour verticale selon la revendication 1 ou 2, les moyens de guidage étant placés dans un plan formant un angle entre 0,8 et 1,2 degrés avec le plan ZX.

4. Tour verticale selon les revendications précédentes, comprenant des moyens de compensation pour le mouvement du vérin dans la direction Z selon une longueur équivalente au déplacement du support de vérin dans la direction Z, le mouvement du vérin étant dans la direction opposée au déplacement du support de vérin.

5. Tour verticale selon les revendications précédentes comprenant un moteur (9) et un système arbre-écrou, le moteur (9) et un arbre fileté étant fixés au support (4) et un écrou étant fixé au support de vérin (51) de telle sorte que la rotation du moteur (9) produit une rotation d'un arbre fileté (91) et un déplacement linéaire de l'écrou et par conséquent du support de vérin (51) qui coulisse le long des moyens de guidage (42, 52).

6. Tour verticale selon les revendications précédentes comprenant un contre-poids monté entre le support de vérin (51) et le support (4), le contre-poids comprenant une base (10) montée sur le support de vérin (51) et un cylindre de pression (11) en contact avec le support (4).

7. Procédé de compensation des déviations d'un vérin dans une direction Y d'une tour verticale comprenant un vérin (5) guidé verticalement dans un support de vérin (51) qui est monté sur un support transversal (4) au moyen de moyens de guidage, **caractérisé en ce qu'**il comprend les étapes consistant à :
- déplacer le support de vérin par rapport au support transversal dans une direction W qui déplace le support de vérin simultanément dans la direction Z et dans la direction Y
- déplacer le vérin le long de la direction Z selon une longueur équivalente au déplacement du support de vérin dans la direction Z, le mouvement du vérin étant dans la direction opposée au déplacement du support de vérin.

8. Procédé selon la revendication 6, la direction W étant contenue dans un plan formant un angle entre 0,05 et 1,5 degrés par rapport au plan ZX.

9. Procédé selon la revendication 6, la direction W étant contenue dans un plan formant un angle entre 0,08 et 1,2 degrés par rapport au plan ZX.
